Europäisches Patentamt

European Patent Office

Office européen des brevets

(11) Publication number: **0 364 951 B1**

## EUROPEAN PATENT SPECIFICATION

(45) Date of publication of patent specification: **23.02.94** (51) Int. Cl.⁵: **G02B 17/06**, G02B 17/00

(21) Application number: **89119256.9**

(22) Date of filing: **17.10.89**

(54) Continuous zoom all-reflective optical system.

(30) Priority: **17.10.88 US 259013**
**17.10.88 US 259012**

(43) Date of publication of application:
**25.04.90 Bulletin 90/17**

(45) Publication of the grant of the patent:
**23.02.94 Bulletin 94/08**

(84) Designated Contracting States:
**DE FR GB IT NL**

(56) References cited:
**GB-A- 2 197 498**

**OPTICAL ENGINEERING, vol. 20, no. 3,
May/June 1981, pages 450-459; W.E. WOEHL:
"An all-reflective zoom optical system for
the infrared"**

**OPTICAL ENGINEERING, vol. 28, no. 9, September 1989, pages 1014-1018; S.Y. RAH et
al.: "Four-spherical-mirror zoom telescope
continuously satisfying the aplanatic condition"**

(73) Proprietor: **Hughes Aircraft Company
7200 Hughes Terrace
P.O. Box 45066
Los Angeles, California 90045-0066(US)**

(72) Inventor: **Cook, Lacy G
615 Eucalyptus Drive
El Segundo California 90245(US)**

(74) Representative: **KUHNEN, WACKER & PARTNER
Alois-Steinecker-Strasse 22
D-85354 Freising (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

1. Technical Field

This invention relates to reflective telescope systems and, more particularly, to an all-reflective continuous zoom optical system.

2. Discussion

The performance of conventional high quality telescopes when used on the earth for celestial viewing is principally limited to the earth's atmosphere rather than by the construction of the telescopes. Atmospheric effects not only limit the resolution of a telescope, but also absorb large portions of the electromagnetic spectral range. While in the past, little could be done about this limitation, today, with the help of earth satellites and other space vehicles, it is possible to place a telescope above the atmosphere and perform extraterrestrial observations without interference from it. As a result, there has arisen a need for a telescope which can more fully take advantage of this new environment. Also, it should be understood that the present invention may be utilized for other airborne or ground based applications that require viewing distant objects.

One such telescope is that disclosed in U.S. Patent No. 4,101,195, issued to Korsch. This reference discloses an anastigmatic three-mirror telescope. This telescope has a primary and secondary configuration similar to a Cassegrain design which forms a real image closely behind the primary mirror. The image is then relayed or reimaged by a tertiary mirror at approximately unit magnification to a flat plane for viewing, the plane being parallel to or displaced from the axis of the primary and secondary mirrors.

Also, the advantages of zoom optical systems are well known to those skilled in the art. However, virtually all of the known zoom optical systems utilize refractive optical elements in whole or in part. Refractive optical elements generally have one or more of the following disadvantages. Refractive systems generally have spectral limitations and chromatic aberrations. Refractive systems have size limitations and a lack of radiation hardness. Further, the refractive systems are sensitive to thermal changes and are exceptionally heavy.

SUMMARY OF THE INVENTION

According to the teachings of the present invention, a system is provided which retains the versatility and benefits of zoom optics while eliminating the disadvantages of refractive optical systems. The present invention provides an all-reflective continuous zoom system comprised of a three-mirror anastigmat, one of the mirrors which is moved to effect a change in focal length, field of view, or both. The faster speed, coarser resolution, wider field of view extreme of the zoom range enables search and acquisition functions during operation of the system. The slower speed, finer resolution and smaller field of view enables tracking and detailed imaging during operation of the system.

A reflective continuous zoom optical system according to the invention is defined in claim 1. The preamble of claim 1 corresponds to GB-A-2 197 498.

BRIEF DESCRIPTION OF THE DRAWINGS

The various advantages of the present invention will become apparent to those skilled in the art after a study of the following specification and by reference to the drawings in which:
FIG. 1 is a schematic diagram of an along-scan view of an apparatus in accordance with the teaching of the present invention;
FIG. 2 is a schematic diagram of a cross-scan view of FIG. 1;
FIG. 3 is a schematic diagram of an along-scan view of another apparatus in accordance with the teaching of the present invention;
FIG. 4 is a schematic diagram of a cross-scan view of FIG. 3; and
FIG. 5 is a vertical cross-section view of an opto-mechanical schematic illustrating implementations of a system in accordance with the present invention.
Fig. 6 is a schematic diagram of an along-scan view of a further embodiment of the apparatus in accordance with the present invention.
Fig. 7 is a schematic diagramm of across-scan view of the system of Fig. 6.

Fig. 8 is a schematic diagram of the lateral or transverse positioning of the focal plane of the system of Fig. 6 and 7.

Fig. 9 is another embodiment of schematic diagram of the lateral or transverse positioning of the system of Fig. 6 and 7.

Fig. 10 is another embodiment of a schematic diagram of an along-scan view of the apparatus in accordance with the present invention.

Fig. 11 is a schematic diagram of a cross scan view of the system of Fig. 10.

## DESCRIPTION OF THE PREFERRED EMBODIMENT

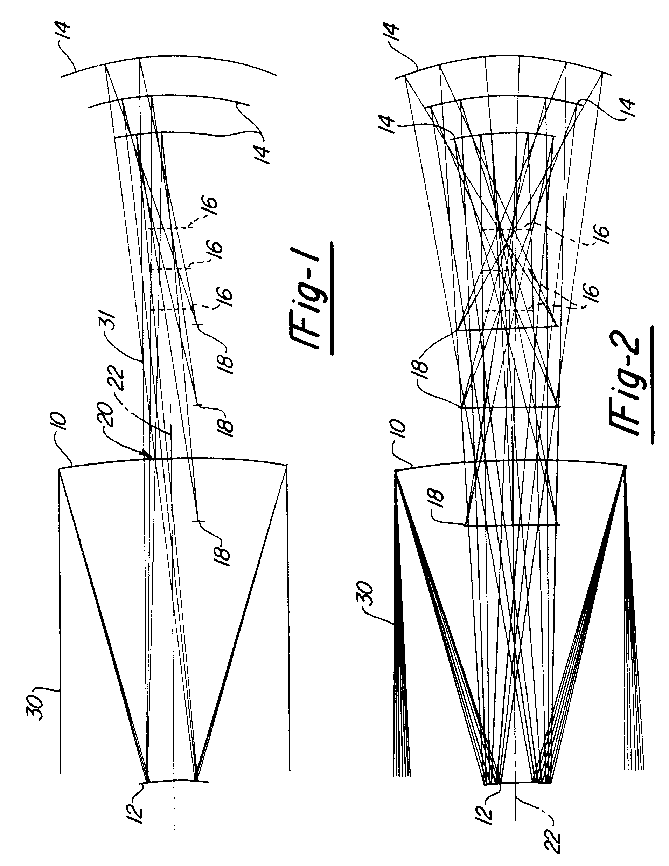

Referring to FIGS. 1 and 2, an anastigmatic optical system is shown including a primary 10, secondary 12 and tertiary 14 mirror. The system also includes an aperture stop 16 and a focal plane 18.

The primary mirror 10 includes a central opening 20 and a central axis 22 defining the system optical axis. The primary mirror 10 is a positive power mirror and may be an ellipsoidal conic or higher order aspheric mirror.

The secondary mirror 12 is a negative power mirror and is positionesd substantially symmetric with the central axis 22 of the primary mirror 10. The secondary mirror 12 has a diameter smaller than the primary mirror 10 and may be a hyperboloid conic of higher order aspheric mirror.

The tertiary mirror 14 is a positive power mirror. The tertiary mirror 14 may be of ellipsoid conic shape or a higher order aspheric. There my be a single tertiary mirror 14 or a plurality of tertiary mirrors whereby with respect ot Figures 1 to 5 an embodiment of the present invention is described which utilizes a single tertiary mirror 14.

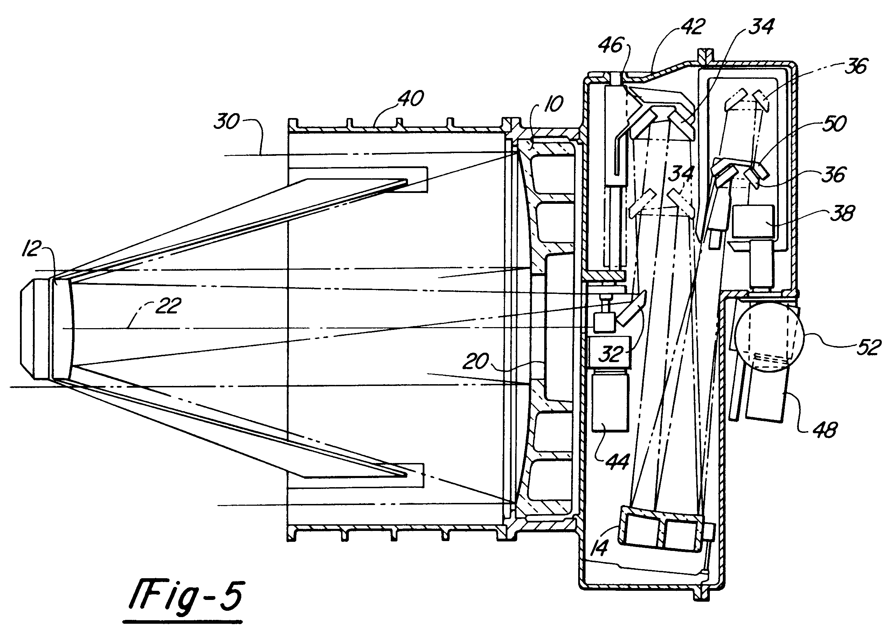

The tertiary mirror 14 is ordinarily associated with at least one pair of planar fold mirrors, best seen in FIG. 5. The fold mirrors are generally the moving mirrors and move with respect to the tertiary mirror 14 reflecting the light beams 30 to or from the tertiary mirror 14. As the fold mirrors move, the focal length, field of view, or both is changed in the system.

In operation, an object to be viewed is reflected by the primary mirror 10. The light beams 30 from the object being viewed are received and reflected from the primary mirror 10 to the secondary mirror 12. The light beams 30 are received by and reflected from the secondary mirror 12 through the central opening 20 of the primary mirror 10. Prior or subsequent to the beams 30 passing through the central opening 20, an intermediate image of the object being viewed is formed by the primary-secondary mirrors at 31. The intermediate image, formed by beams 30, is reflected through the remainder of the system and is ultimately reimaged as the real image at the focal plane 18.

After passing through the central opening 20, the beams 30 generally are reflected by a stationary planar mirror 32 to a first pair of moveable planar fold mirrors 34. The first pair of moveable planar fold mirrors 34 move toward and away from the tertiary mirror 14, as seen in phantom in FIG. 5. The beams 30 are received and reflected from the first pair of moveable planar fold mirrors 34 to the tertiary mirror 14. The tertiary mirror 14 receives and reflects the rays 30 to a second pair of moveable planar fold mirrors 36. The second pair of moveable planar fold mirrors 36 move toward and away from the tertiary mirror 14. The second pair of moveable planar fold mirrors 36 receives and reflects the beams 30 through the aperture stop 16 to an electronic sensing device 38 at the focal plane 18. The electronic sensing device may be a detector array or the like.

The moveable planar fold mirrors 34 and 36 and the tertiary mirror 14 effect the focal length, field of view, or both of the image viewed through the primary 10 and secondary 12 mirrors. Thus, the system provides a zoom range which is appropriate for search and acquisition functions as well as for tracking and detail imaging functions. In the system, the distance from the tertiary mirror 14 to the aperture stop 16 is substantially constant as the zoom moves through its plurality of position. Also, as a practical matter, it is preferred that the powered mirrors, aperture stop, and focal plane remain fixed.

In FIGS. 1 and 2, the final images at focal plane 18 have a common offset from the optical axis. However, due to varying magnification ratios of the tertiary mirror 14, the corresponding intermediate images 31 have varying offsets from the optical axis. As a consequence, there is a line of sight shift with the zoom operation. However, this line of sight shift does not adversely effect the system.

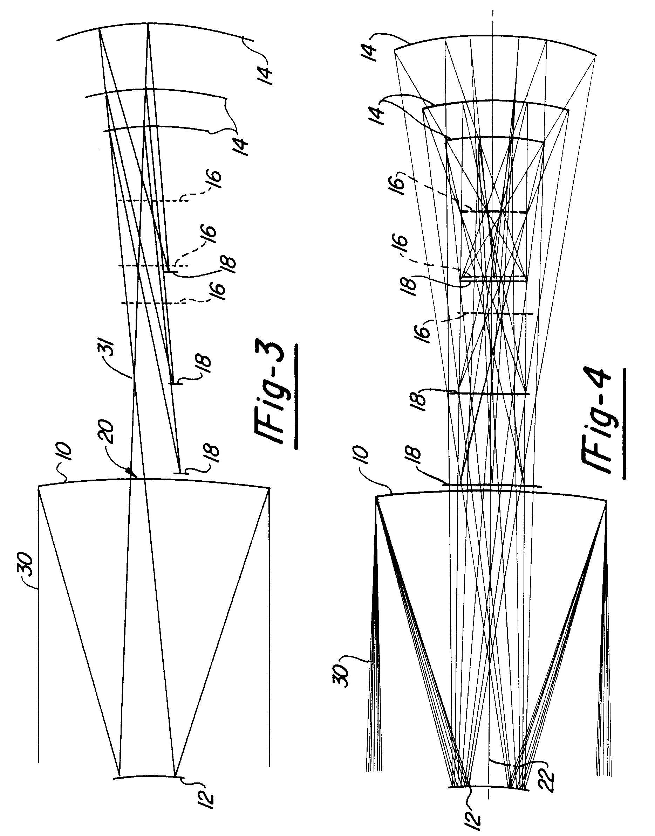

In FIGS. 3 and 4, the inverse of FIGS. 1 and 2 is illustrated. The final images on the focal plane 18 have varying offsets. The offsets correspond to the tertiary mirror's 14 varying magnification ratios to yield intermediate images 31 with a constant or common offset. Thus, there is no line of sight shift with the zoom operation. It should be noted that either of the above offsets work equally as well as the other.

As best seen in FIG. 5, the system generally includes a housing or tube 40 which houses the primary 10 and secondary 12 mirrors. A second portion of the housing 42 is coupled with the tube 40. A drive gear box 44 is coupled with the first pair of moveable planar fold mirrors 34 through a carriage 46 to drive the first pair of moveable planar fold mirrors 34. A second drive gear box 48 is coupled with the second pair of moveable planar fold mirrors 36 through a carriage 50 to drive the second pair of moveable planar fold mirrors 36. Also, a refrigerator may be coupled with the housings to cool the electronic sensing device as might be required for imaging in the infrared portion of the electromagnetic spectrum. It should be understood that the tertiary mirror could be moved fore and aft to eliminate the need for the moveable fold mirrors.

Turning to the Figures 6 to 11, an anastigmatic optical system is illustrated including a primary mirror 110, a secondary mirror 112, and two or more tertiary mirrors 114 and 116. The three-mirror system also includes two or more aperture stops 118 and 120, and two or more focal planes 122 and 124. Also, the system would include a plurality of planar fold mirrors (not shown) which would receive and reflect the light beams to or from the desired tertiary mirrors.

The primary mirror 110 defines a central axis 126 and may have a central aperture 128. The primary mirror 110 is a positive power mirror and is generally an ellipsoid mirror although it could be a higher order aspheric mirror.

The secondary mirror 112 has a diameter smaller than the primary mirror 110 and is positioned substantially symmetrically on the central axis 126. The secondary mirror 112 is a negative power mirror and is generally a hyperboloid conic mirror although it could be a higher order aspheric mirror.

The tertiary mirrors 114 and 116 are positive power mirrors. The tertiary mirrors 114 and 116 may be ellipsoid conic mirrors although they could be higher order aspheric mirrors. Generally, the base radii of the tertiary mirrors 114 and 116 are substantially the same. However, the higher order departures or higher order aspheric figures may be different to modify the characteristics of the system. With having their base radii substantially the same, the Petzval sum of the system may be manipulated to be substantially zero at both focal planes.

In FIGS. 6 and 7, light beam 130 transmit an image of an object to be viewed to the primary mirror 110. The beams 130 are reflected from the primary mirror 110 to the secondary mirror 112. The secondary mirror 112 receives and reflects the light beams 130 to the tertiary mirrors 114 and 116. The light beams 130 may be received by and reflected from planar fold mirrors prior to being reflected to the tertiary mirrors 114 and 116. Also, planar fold mirrors may receive and reflect the light beams after the beams reflect from the tertiary mirrors 114 and 116.

As the light beams 130 pass toward the tertiary mirrors 114 and 116, an intermediate imag is formed at 132. The intermediate image of the ligth beams 130 is reflected from the tertiary mirrors 114 and 116 through aperture stops 118 and 120, respectfully, and reimages the intermediate image at focal planes 122 and 124. An electronic sensing device (not shown) such as an electronic detector array, or the like, is positioned at each of the focal planes 122 and 124 to receive the real images. Each focal plane receives an image at a different focal length. Also, each focal plane has a different field of view. This being the case, different electronic sensing devices may be positioned at each focal plane so that a different image may be sensed at each focal plane. For example, infrared detectors may be used as the electronic sensing device and provide a large scene with coarse resolution of the object being viewed. Simultaneously, a small portion of the same scene may be viewed with fine resolution by a visible detector. Thus, the system provides for simultaneous viewing of an object at different focal lengths, resolutions, and fields of view, and different detectors may be used at each focal plane.

Turning to FIGS 6 and 7, the FIGS. illustrate an along-scan and cross-scan view of an F/22 and F/14 design with 0.15° and 0.5°, respectfully, line field of view. As can be seen in FIGS. 8 and 9, the line field of view can be on different sides of the optical axis, as seen in FIG. 8 or on the same side of the optical axis, as seen in FIG. 9. Depending upon the particular system and the particular design, the field of view may be on either the same side or opposite sides of the optical axis.

The F/22 design with a 0.15° line field of view has its tertiary mirror 114 located to the left of th eprimary mirror 110 vertex. This tertiary mirror is utilized at about 2:1 magnification. The geometrical 80% blur diameters across the field of view are reasonably uniform and average about 0.1 to 0.2 microradians. the F/14 disign with a 0.5° line field of view has its tertiary mirror 116 located to the right of the primary mirror 110 vertex. this tertiary mirror is utilized at about 1:1 magnification. Aberration residuals as represented by geometrical 80% blur diameters average about 1.0 to 2.0 microradians across the line field of view.

In order to move the final image away from the intermediate image and to provide access to the aperture stops, it is necessary to offset the field of view in the along-scan direction. In FIGS. 6 and 7, the focal plane 122 is offset about 0A° while the focal plane 124 is offset about 0B°. This difference in field offset ensures a complete separation of the two line field of views in the region of the intermediate image designated at 132. The separation of images further allows the use of a plurality of fold mirrors to separate the subsequent portions of the two optical systems and package them as desired. If tilts or decenters are not employed on the primary or secondary mirrors, the two fields can be operated on either the same or opposite sides of the optical axis as illustrated in FIGS. 8 and 9. The angular separation can be as much as OA° + OB° or as little as OB° - OA°. The utility and/or packaging constraints dictate one or the other configurations.

Moving to FIGS. 10 and 11, a further embodiment of the present invention is shown. In FIGS. 10 and 11, the primary 110 and secondary 112 mirrors are substantially the same. However, a plurality of tertiary mirrors 140, 142, 144 and 146 are illustrated. The system includes aperture stops 148, 150, 152, 154 and focal planes 156, 158, 160 and 162. This design illustrates the use of the least four tertiary mirrors. As stated above, the same or different electronic sensing devices may be placed at each of the focal planes to view different fields of view at different focal lengths.

The present system provides a telescope having a plurality of fixed tertiary mirrors which may resolve a one meter target 1 million to 10 million meters away. Thus, the system will not be limited by the image quality, however, it may be limited by the electronic sensors or physics of diffraction of the front aperture.

One application of the present invention in an operational aerospace system may be as follows. For instance, it might be desirable to view a large scene with coarse resolution in an infrared image. Thus, an infrared detector may be positioned at a focal plane corresponding to a tertiary mirror with a wider field of view and shorter focal length. Simultaneously, a view of a small portion of that scene, at an entirely differnt wavelength, with an entirely different imaging device may be desired. The second imaging device may be a visible device. The visible detector would be positioned at a focal plane corresponding to a tertiary mirror with a longer focal length and narrower field of view. Thus, both infrared and visible images would be transmitted simultaneously to a screen or the like from the same telescope.

A specific prescription for the system in accordance with the present invention is as follows.

TABLE 1: OPTICAL PRESCRIPTION OF A SPECIFIC
EMBODIMENT OF OPTICAL SYSTEM OF
THE PRESENT INVENTION

| # | Description | Radius | Conic Constant | Thickness | |
|---|---|---|---|---|---|
| 10 | Primary Mirror | -104.067 | -0.92298 | -39.4831 | |
| 12 | Secondary Mirror | -32.8640 | -1.9639 | 100.005 | Ⓐ |
| | | | | 91.329 | Ⓑ |
| | | | | 86.351 | Ⓒ |
| 14 | Tertiary Mirror | -38.6032 | 1.0489* | -32.847 | Ⓐ |
| | | | | -39.065 | Ⓑ |
| | | | | -46.062 | Ⓒ |
| 18 | Focal Plane | ∞ | --- | --- | |

[(+) Thickness are to the right;
(+) Radii have centers to the right]

* Higher order aspheric figure departures according to
the equation:

$$z = \frac{c\rho^2}{1 + \sqrt{1 - (k + 1)c^2\rho^2}} + d\rho^4 + e\rho^6$$

where:

$z$ = surface sag

$c$ = 1/radius

$k$ = cc = conic constant = $-(\text{eccentricity})^2$

$\rho^2 = x^2 + y^2$

$d = 0.32497 \times 10^{-5}$

$e = 0.36639 \times 10^{-8}$

```
zoom configuration  Ⓐ  : 30 diameter entrance aperture
                          154.2 effective focal length
                          F/5.14 optical speed
                          3° line field of view

                     Ⓑ  : 30 diameter entrance aperture
                          225.0 effective focal length
                          F/7.50 optical speed
                          2.25° line field of view

                     Ⓒ  : 30 diameter entrance aperture
                          305.5 effective focal length
                          F/10.2 optical speed
                          1.5° line field of view
```

A further specific prescription for the system in accordance with the present invention is disclosed in document PD-87359 attached to this document.

While the above describes a preferred embodiment of the present invention, it will be understood that the prescription may be modified or changed without deviating from the scope of the invention.

The present invention has several advantages over conventional zoom type lenses. The present invention uses an all-reflective system to provide a zoom optical system. The present invention enables fast optical speed, coarse resolution and wide field of view extreme of the zoom range which is appropriate for search and acquisition functions. The present invention also provides slower optical speed, finer resolution and smaller field of view extreme which provides tracking and detailed imaging functions. The present invention enables the use of a Cassegrain foreoptic system with a tertiary mirror operating over a continuous range of conjugates to yield high resolution imagery on a flat focal surface.

It should be understood that while this invention has been described in connection with a particular example hereof, that various modifications, alterations and variation of the disclosed preferred embodiment can be made after having the benefit of a study of the specification, drawings and the subjoined claims.

**Claims**

1. A reflective continuous zoom optical system comprising:
   a primary mirror (10; 110) having a central opening (20; 128);
   a secondary mirror (12; 112) facing said primary mirror (10; 110), said secondary mirror (12; 112) being of a smaller diameter than said primary mirror (10; 110) and positioned substantially symmetrically with respect to the axis (22; 126) of said primary mirror (10; 110) such that light (30; 130) from a viewed object passes around and by said secondary mirror (12; 112) and is reflected through said central opening (20; 128) in said primary mirror (10; 110);
   means (14, 34, 36; 114, 116; 140, 142, 144, 146) for reflecting said light (30; 130) from said viewed object to an image plane and for forming an image that can be viewed (18; 122, 124; 148, 150, 152, 154) and being positioned to receive said light (30; 130) from said secondary mirror (12; 112), characterized in that
   said primary (10; 110) and said secondary (12; 112) mirrors are arranged to form an intermediate real image of said viewed object which is reflected and imaged by said reflection means (14, 34, 36; 114, 116; 140, 142, 144, 146) onto said image plane for viewing (18; 122, 124; 148, 150, 152, 154); and by means (44, 46, 48) for altering the focal length and/ or the field of view of the system by moving said reflection means (14, 34, 36; 114, 116; 140, 142, 144, 146) through a plurality of positions relative to said primary (10; 110) and secondary (12; 112) mirrors.

2. The system according to claim 1 wherein said primary mirror (10; 110) has positive power.

3. The system according to claim 1 wherein said secondary mirror (12; 112) has negative power.

4. The system according to claim 1 wherein said reflecting means (14, 34, 36; 114, 116; 140, 142, 144, 146) includes one or more tertiary mirrors (14; 114, 116; 140, 142, 144, 146).

**5.** The system according to claim 4 wherein said one or more tertiary mirrors (14; 114, 116; 140, 142, 144, 146) are positive power mirrors.

**6.** The system according to claim 4 wherein said reflecting means (14, 34, 36; 114, 116; 140, 142, 144, 146) includes one or more pairs of movable planar fold mirrors (34, 36) receiving and reflecting light to or from said tertiary mirror (14; 114, 116; 140, 142, 144, 146) such that as said pairs of planar fold mirrors (34, 36) move, said focal length and/or said field of view of said system changes.

**7.** The system according to claim 1 further comprising an electronic sensing means (38) positioned adjacent to said viewing plane (18; 122, 124; 148, 150, 152, 154) for receiving light from said reflecting means (14; 34, 36; 114, 116; 140, 142, 144, 146).

**8.** The system according to claim 4 or 5, where said one or more tertiary mirrors (14; 114, 116; 140, 142, 144, 146) have substantially the same base radius.

**9.** The system according to claim 8, wherein said one or more tertiary mirrors (14; 114, 116; 140, 142, 144, 146) are aspheric.

**Patentansprüche**

**1.** Ein reflektierendes kontinuierliches optisches Zoom-System mit:
einem Primärspiegel (10; 110), der eine zentrale Öffnung (20; 128) aufweist;
einem Sekundärspiegel (12; 112), der dem Primärspiegel (10; 110) gegenüberliegt, wobei der Sekundärspiegel (12; 112) einen kleineren Durchmesser aufweist als der Primärspiegel (10; 110) und im wesentlichen symmetrisch im Hinblick auf die Achse (22; 126) des Primärspiegels (10; 110) positioniert ist, so daß Licht (30; 130) von einem beobachteten Object um den Sekundärspiegel (12; 112) herum und an ihm vorbeigeht und durch die zentrale Öffnung (20; 120) in den Primärspiegel (10; 110) reflektiert wird;
einer Vorrichtung (14, 34, 36; 114, 116; 140, 142, 144, 146) zum Reflektieren des Lichtes (30; 130) von dem beobachteten Objekt zu einer Bildebene (18; 122, 124; 148, 150, 152, 154) und zum Bilden eines Bildes, das betrachtet werden kann, wobei sie positioniert wird, um das Licht (30; 130) von dem Sekundärspiegel (12; 112) zu empfangen; dadurch gekennzeichnet, daß
der Primär-(10; 110) und der Sekundär-(12, 112) Spiegel angeordnet ist, um ein reales Zwischenbild des beobachteten Objektes zu bilden, das mittels der Reflexionsvorrichtung (14, 34, 36; 114, 116; 140, 142, 144, 146) auf die Bildebene zum Betrachten (18; 122, 124; 148, 150, 152, 154) reflektiert und abgebildet wird; und durch eine Vorrichtung (44, 46, 48) zum Ändern der Brennweite und/oder des Bildfeldes des Systemes, indem die Reflexionsvorrichtung (14, 34, 36; 114, 116; 140, 142, 144, 146) über eine Vielzahl von Positionen hinweg relativ zu dem Primär-(10; 110) und dem Sekundär-(12; 112) Spiegel bewegt wird.

**2.** Das System nach Anspruch 1, worin der Primärspiegel (10; 110) eine positive Leistung aufweist.

**3.** Das System nach Anspruch 1, worin der Sekundärspiegel (12; 112) eine negative Leistung aufweist.

**4.** Das System nach Anspruch 1, worin die Reflexionsvorrichtung (14, 34, 36; 114, 116; 140, 142, 144, 146) eine oder mehrere Tertiärspiegel (14; 114, 116; 140, 142, 144, 146) enthält.

**5.** Das System nach Anspruch 4, worin der eine oder die mehreren Tertiärspiegel (14; 114, 116; 140, 142, 144, 146) Spiegel mit positiver Leistung sind.

**6.** Das System nach Anspruch 4, worin die Reflexionsvorrichtung (14, 34, 36; 114, 116; 140, 142, 144, 146) ein Paar oder mehrere Paare aus beweglichen ebenen Faltspiegeln (34, 36) enthält, die Licht empfangen und reflektieren, und zwar von oder zu einem der tertiären Spiegel (14; 114, 116; 140, 142, 144, 146), so daß sofern sich die Paare aus den ebenen Faltspiegeln (34, 36) bewegen, die Brennweite und/oder das Bildfeld des Systemes sich ändert.

**7.** Das System nach Anspruch 1, welches des weiteren ein elektronisches Tastsystem (38) umfaßt, das benachbart zu der Betrachtungsebene (18; 122, 124; 148, 150, 152, 154) positioniert ist, um Licht von der Reflexionsvorrichtung (14; 34, 36; 114, 116; 140, 142, 144, 146) zu empfangen.

8.  Das System nach Anspruch 4 oder 5, worin der eine oder die mehreren Tertiärspiegel (14; 114, 116; 140, 142, 144, 146) im wesentlichen den gleichen Basisradius aufweisen.

9.  Das System nach Anspruch 8, worin der eine oder die mehreren Tertiärspiegel (14; 114, 116; 140, 142, 144, 146) asphärisch sind.

**Revendications**

1.  Système optique réfléchissant à zoom continu comportant :
    un miroir primaire (10 ; 110) ayant une ouverture centrale (20 ; 128) ;
    un miroir secondaire (12; 112) faisant face audit miroir primaire (10 ; 110), ledit miroir secondaire (12; 112) étant d'un diamètre inférieur à celui dudit miroir primaire (10 ; 110) et étant positionné sensiblement symétriquement par rapport à l'axe (22 ; 126) dudit miroir primaire (10 ; 110) de manière que de la lumière (30 ; 130) provenant d'un objet visé passe autour dudit miroir secondaire (12 ; 112) et par celui-ci et qu'elle soit réfléchie à travers ladite ouverture centrale (20 ; 128) dans ledit miroir primaire (10 ; 110) ;
    des moyens (14, 34, 36 ; 114, 116 ; 140, 142, 144, 146) destinés à réfléchir ladite lumière (30 ; 130) provenant dudit objet visé sur un plan image et à former une image (18 ; 122, 124 ; 148, 150, 152, 154) pouvant être observée et positionnée pour recevoir ladite lumière (30 ; 130) provenant dudit miroir secondaire (12 ; 112), <u>caractérisé en ce que</u>
    lesdits miroirs primaire (10 ; 110) et secondaire (12 ; 112) sont agencés pour former une image réelle intermédiaire dudit objet visé qui est réfléchie et formée en une image par lesdits moyens de réflexion (14, 34, 36 ; 114, 116 ; 140, 142, 144, 146) sur ledit plan image pour une observation (18 ; 122, 124 ; 148, 150, 152, 154) ; et en ce que
    des moyens (44, 46, 48) sont destinés à modifier la longueur focale et/ou le champ de visée du système par déplacement desdits moyens de réflexion (14, 34, 36 ; 114, 116 ; 140, 142, 144, 146) par plusieurs positions par rapport auxdits miroirs primaire (10 ; 110) et secondaire (12 ; 112).

2.  Système selon la revendication 1, dans lequel ledit miroir primaire (10 ; 110) possède une puissance positive.

3.  Système selon la revendication 1, dans lequel ledit miroir secondaire (12 ; 112) possède une puissance négative.

4.  Système selon la revendication 1, dans lequel lesdits moyens réfléchissants (14, 34, 36 ; 114, 116 ; 140, 142, 144, 146) comprennent un ou plusieurs miroirs tertiaires (14 ; 114, 116 ; 140, 142, 144, 146).

5.  Système selon la revendication 4, dans lequel ledit ou lesdits miroirs tertiaires (14 ; 114, 116 ; 140, 142, 144, 146) sont des miroirs à puissance positive.

6.  Système selon la revendication 4, dans lequel lesdits moyens réfléchissants (14, 34, 36 ; 114, 116 ; 140, 142, 144, 146) comprennent une ou plusieurs paires de miroirs plans mobiles (34, 36) de repli recevant et réfléchissant de la lumière vers ledit ou à partir dudit miroir tertiaire (14 ; 114, 116 ; 140, 142, 144, 146) de manière que, lorsque lesdites paires de miroirs plans (34, 36) de repli se déplacent, ladite longueur focale et/ou ledit champ de visée dudit système changent.

7.  Système selon la revendication 1, comportant en outre un moyen capteur électronique (38) positionné de façon à être adjacent audit plan d'observation (18 ; 122, 124 ; 148, 150, 152, 154) pour recevoir de la lumière provenant desdits moyens de réflexion (14 ; 34, 36 ; 114, 116 ; 140, 142, 144, 146).

8.  Système selon la revendication 4 ou 5, dans lequel ledit ou lesdits miroirs tertiaires (14 ; 114, 116 ; 140, 142, 144, 146) ont sensiblement le même rayon de base.

9.  Système selon la revendication 8, dans lequel ledit ou lesdits miroirs tertiaires (14 ; 114, 116 ; 140, 142, 144, 146) sont asphériques.

_ffig-3_

_ffig-4_

EP 0 364 951 B1

*Fig-5*

EP 0 364 951 B1